# EUROPÄISCHE PATENTSCHRIFT

(11) **EP 2 596 172 B1**
(45) Veröffentlichungstag und Bekanntmachung des Hinweises auf die Patenterteilung: **08.11.2017**
(21) Anmeldenummer: 11732377.4
(22) Anmeldetag: 12.07.2011
(51) Int. Cl.: E01B 9/30, E01B 9/48

(54) **SCHIENENBEFESTIGUNGSSYSTEM**
RAIL FASTENING SYSTEM
SYSTÈME DE FIXATION DE RAIL

(30) Priorität: 19.07.2010 DE 102010027560
(43) Veröffentlichungstag der Anmeldung: 29.05.2013
(73) Patentinhaber: SCHWIHAG AG, 8274 Tägerwilen (CH)
(72) Erfinder: BUDA, Roland, 78315 Radolfzell am Bodensee (DE)
(74) Vertreter: Grosse, Wolf-Dietrich Rüdiger
(86) Internationale Anmeldenummer: PCT/EP2011/003472
(87) Internationale Veröffentlichungsnummer: WO 2012/010269

(56) Entgegenhaltungen:
- EP-A1- 0 808 946
- EP-A2- 0 393 432
- DE-A1- 4 034 032
- DE-C2- 3 400 110
- FR-A2- 2 327 887

## Beschreibung

Die Erfindung betrifft ein Schienenbefestigungssystem zur kraftschlüssig-elastischen Befestigung einer Schiene auf einer Schwelle einer Gleisanlage, umfassend mindestens eine an der Schwelle mit mindestens einem einen Schaft aufweisenden Befestigungselement festlegbare Winkelführungsplatte und mindestens eine Spannklemme, wobei die Winkelführungsplatte ausgebildet ist, um die Spannklemme in einer Vormontageposition und in einer Endmontageposition zu halten.

Eine Schienenbefestigung einer ähnlichen Art ist aus der DE 34 00 110 C2 bekannt, wobei ein Befestigungssystem offenbart wird, bei dem die Verspannung der Eisenbahnschiene mittels der Komponenten Schraube, Dübel, Winkelführungsplatte und Spannklemme erfolgt. Es kommt eine Spannklemme zum Einsatz, die im montierten Zustand zwischen einer Winkelführungsplatte (Halteplatte) und einer Schraube (Befestigungsanker) angeordnet ist. Die Spannklemme weist dabei zwei Schenkel auf, die als Torsionselemente gestaltet sind. Die Torsionsschenkel haben zwei parallel nebeneinander liegende Federstababschnitte, die einstückig durch eine einen Verspannungsabschnitt bildenden und im wesentlichen quer zu ihnen nach außen gebogene Schlaufe in Verbindung stehen.

An ein solches Schienenbefestigungssystem stellen sich dabei verschiedene Aufgaben:

Zunächst ist es wünschenswert, dass verschiedene Schienentypen (beispielsweise Typ U 50 und Typ UIC 60) mit unterschiedlichen Schienenfußbreiten auf unterschiedlichen Betonschwellentypen mit nur einem Spannklemmtyp verspannt werden können. Die Anpassung kann dabei über verschiedene Winkelführungsplatten erfolgen.

Dann ist es für eine einfache, kostengünstige und sichere Montage des Schienenbefestigungssystems vorteilhaft, wenn die Montage durch Verschiebung der Spannklemme von einer Vormontageposition (mit einer Verspannung der Schraube mit einem Drehmoment von ca. 50 Nm) in die Endmontageposition erfolgen kann. Hierbei ist es wichtig, dass ein einfaches Schieben der Spannklemme mittels eines Schiebers ohne vorheriges Lösen der (mit dem genannten Drehmoment vorgespannten) Schraube erfolgen kann. Wichtig ist ferner, dass ein Anheben der Schwelle hierbei nicht nötig ist, was die Montage wesentlich erschweren würde. Nur so ist eine automatisierte Montage möglich.

Ein weiterer und bei der vorliegenden Erfindung zentraler Aspekt ist, dass die Schienenbefestigung einen hohen elektrischen Widerstandswert erreicht. Dieser wird zwischen den beiden Schienen auf einer Betonschwelle im nassen Zustand gemessen, d. h. der Widerstandswert wird während einer Dauerberegnung gemessen. Die elektrische Isolation der Schiene gegenüber der Schwelle erfolgt üblicherweise über den Kunststoffdübel für die Schraube, die Schienenzwischenlage aus Gummi oder Kunststoff und die Kunststoffwinkelführungsplatte. Im Trockenzustand ist diese Art der Isolierung völlig ausreichend. Im Nasszustand (d. h. bei Regen) ist diese Isolierung nicht ausreichend, weil Wasser in die Spalten und Ritzen des Schienenbefestigungssystems fließt. Insbesondere ist der Dübelbereich betroffen; das in den Dübel fließende Wasser führt zur Überbrückung der elektrischen Widerstände. Im Stand der Technik hat man sich dadurch beholfen, dass in den Dübel vor der Verschraubung Fett (z. B. Elaskon) eingebracht wird. Nachdem das im unregelmäßigen Baubetrieb erfolgt und zudem das Fett nach gewisser Zeit verhärtet, ist die Isolierwirkung nur bedingt gegeben.

Die vorbekannten Schienenbefestigungssysteme weisen also hinsichtlich dieser Aufgabenfelder noch Schwachstellen auf.

Der Erfindung liegt daher die Aufgabe zugrunde, ein Schienenbefestigungssystem der eingangs genannten Art so fortzubilden, dass die oben beschriebenen Anforderungen optimal erfüllt werden können. Demgemäß soll eine einfache und automatisierte Montage des Systems möglich sein, die sich an verschiedene Schienentypen einfach anpassen lässt, wobei vor allem sichergestellt werden soll, dass sich das System durch einen hohen elektrischen Widerstand auszeichnet.

Die Lösung dieser Aufgabe durch die Erfindung ist dadurch gekennzeichnet, dass auf oder in der Winkelführungsplatte und/oder in einem mit der Winkelführungsplatte zu verbindenden Bauteil ein Dichtungselement angeordnet ist, das sowohl in der Vormontageposition als auch in der Endmontageposition mit mindestens einer ersten Dichtfläche dichtend am Schaft des Befestigungselements und mit mindestens einer zweiten Dichtfläche an der Winkelführungsplatte und/oder an dem mit der Winkelführungsplatte zu verbindenden Bauteil anliegt.

Das Befestigungselement ist dabei bevorzugt eine Schraube, die in einen in der Schwelle angeordneten Dübel eingeschraubt ist. Es kann alternativ zu dieser Schrauben-Dübel-Kombination auch eine Hakenschraube-Mutter-Kombination zum Einsatz kommen.

Das Dichtungselement ist bevorzugt als Dichtungsring ausgebildet, der vorzugsweise aus zwei Ringabschnitten besteht, die im Radialschnitt zueinander unter einem Winkel angeordnet sind. Die beiden Ringabschnitte können an einer äußeren und/oder inneren Begrenzungsfläche jeweils konisch ausgebildet sein, wobei die radiale Dicke der Ringabschnitte zu den axialen Enden des Dichtungsrings hin jeweils abnimmt.

Das Dichtungselement kann in einem mit der Winkelführungsplatte zu verbindenden Bauteil in Form einer Zwischenhülse angeordnet sein, wobei die Zwischenhülse einen hohlzylindrischen Abschnitt mit einer innenzylindrischen Fläche aufweist, die einen Aufnahmeraum für das Dichtungselement begrenzt. Die Zwischenhülse kann weiterhin einen radial nach innen vorspringenden Abschnitt aufweisen, der einen axialen Anlagebereich für das Dichtungselement bildet.

Das verbindende Bauteil, das Dichtungselement und der Schaft sind bevorzugt konzentrisch zueinander angeordnet.

Das Dichtungselement besteht zumeist aus Elastomer- oder Gummimaterial und weist elastische Materialeigenschaften auf.

Zwischen der Unterseite der Winkelführungsplatte und der Oberseite der Schwelle ist bevorzugt ein weiteres Dichtungselement angeordnet. Dieses kann flächig ausgebildet oder in einer nutförmigen Vertiefung an der Unterseite der Winkelführungsplatte angeordnet sein.

Die Winkelführungsplatte kann für den Schienenauflageabschnitt der Spannklemme eine vorzugsweise keilförmig ausgebildete Auflage aufweisen, auf der der Schienenauflageabschnitt in der Vormontageposition aufliegt. Das der Schiene zugewandte Ende der vorzugsweise keilförmig ausgebildeten Auflage kann dabei mit Vorteil den Schienenfuß um eine vorgegebene Höhe überragen, vorzugsweise um eine Höhe zwischen 5 mm und 15 mm. Damit vereinfacht sich die Montage wesentlich im Falle von Unebenheiten.

Mit der vorgeschlagenen Ausgestaltung des Schienenbefestigungssystems kann erreicht werden, dass die Spannklemme mit der Schraube vormontiert wird, wobei die Schraube mit einem vorgegebenen Vormontage-Drehmoment angezogen wird. Durch einfaches Verschieben der Spannklemme horizontal und senkrecht zur Längsachse der Schiene wird die Spannklemme in die Endmontageposition bewegt, was aufgrund der Ausgestaltung auch dann problemlos möglich ist, wenn ein Versatz zwischen den Schienenauflageabschnitten der Spannklemme und dem Schienenfuß vorliegt.

Die Mittelschlaufe der Spannklemme ist relativ lang ausgeführt, somit sind auch die Spannklemmarme sehr lang. Damit die nötige Spannkraft aufgebracht werden kann, ohne dass der Drahtquerschnitt geändert wird, ist für die beiden Spannklemmenarme eine Geometrie gewählt, die einen Versteifungseffekt erzielt. Der Winkel zwischen dem vorderen Teil (Schienenauflageabschnitt) des Spannklemmenarms und dem hinteren Teil (Spannabschnitt) des Spannklemmenarms ist nahezu rechtwinklig, wodurch der jeweilige Arm fast nur auf Biegung, nicht aber auf Torsion beansprucht wird. Somit können größere Kräfte übertragen werden.

Der vordere Teil der Mittelschlaufe der Spannklemme ist stark nach unten gebogen, damit im eingebauten Zustand (d. h. in der Endmontageposition) der Kippschutz der Spannklemme gegeben ist (die Mittelschlaufe ist der Kippschutz). Bei allen Schienenvarianten und Schwellenvarianten ist dabei der Abstand zum Schienenfuß nicht größer als ca. 2,0 mm.

Die Mittelschlaufe und vorrangig die beiden parallel zueinander im Mittenbereich der Spannklemme verlaufenden Abschnitte weisen zwei abgeplattete Flächen auf, deren Ebenen zueinander um einen kleinen Winkel verschwenkt sind, was sich aufgrund der Länge der parallel zueinander verlaufenden Abschnitte der Mittelschlaufe und des stark abgebogenen vorderen Teils (Schlaufenabschnitt) ergibt. Die Flächen können beispielsweise durch einen Schleifvorgang erzeugt sein.

Die zusätzlich abgeplattete Fläche für die Vormontage auf der Mittelschlaufe bewirkt, dass im Vormontagezustand die Unterlegscheibe unter dem Schraubenkopf planparallel auf der Spannklemme aufliegt und somit kein Verkanten beim Einschieben der Spannklemme von der Vormontageposition in die Endmontageposition auftritt.

Die Winkelführungsplatte ist am Auflagerpunkt der Spannklemmenarme (d. h. der Schienenauflageabschnitte) für die Vormontagestellung bevorzugt keilförmig und um mindestens 10 mm gegenüber der Endposition der Spannklemmenarme auf dem Schienenfuß in der Endmontagestellung überhöht ausgeführt. Der Grund hierfür ist folgender: Im Gleisbau werden die Schwellen mit vormontierter Befestigung hintereinander im Abstand von ca. 0,65 m auf einer ersten planierten Schotterschicht ausgelegt. Danach wird die Schiene auf die Schwellen gelegt, und zwar genau in den Schienenkanal, den die vormontierte Schienenbefestigung bildet. Dabei liegt der Schienenfuß nicht immer vollständig auf den jeweiligen Schwellen auf, weil durch Unebenheiten in der Schotterbettauflage die Schwellen leicht unterschiedlich hoch liegen können. Deshalb kann dann ein bis zu 10 mm breiter Spalt zwischen der Schienenfußunterkante und dem Schwellenauflager entstehen bzw. der Schienenfuß steht dann bis zu maximal 10 mm zu hoch. Somit kann die Spannklemme nicht von der Vormontageposition in die Endmontageposition eingeschoben werden, weil sie gegen den Schienenfuß stößt. Mit der vorgeschlagenen Winkelführungsplatte mit überhöhter keilförmiger Auflage kann dieser Effekt eliminiert werden.

Weiterhin wird der Kraftaufwand beim Verschieben der Spannklemme von der Vormontageposition in die Endmontageposition dadurch reduziert, dass die Mittelschlaufe der Spannklemme in der Vormontageposition elastisch aufgelagert ist, und zwar über die genannte Zwischenhülse, in das das hochelastische Dichtungselement integriert ist. Dieses Zwischenstück mit Dichtungsring erfüllt insoweit eine Doppelfunktion, nämlich der elastischen Lagerung der Spannklemme in der Vormontageposition und eine Abdichtung gegenüber Wasser in der Vor- und auch in der Endmontageposition.

Die oben beschriebene Ausgestaltung erlaubt hinsichtlich der elektrischen Isolation eine wesentliche Verbesserung, erfindungsgemäß ergibt sich eine verbesserte Abdichtung gegen Wasser. Hiernach werden der Dübel und der Bereich um den Dübel komplett gegen Wasser abgedichtet. Somit wird in vorteilhafter Weise der elektrische Widerstand auch bei Regen hoch gehalten.

Die Abdichtung erfolgt zunächst mittels des Zwischenstücks (Zwischenhülse) und dem Dichtring im Bereich der Mittelschlaufe. Der Dichtring dichtet aufgrund seiner Geometrie auch bereits vorteilhafter Weise in der Vormontageposition ab. Beim Verspannen - also beim Annehmen der Endmontageposition - drückt die Mittelschlaufe der Spannklemme auf das Zwischenstück und verformt den Dichtring elastisch. Ferner ist ein weiteres Dichtungselement unten in die Winkelführungsplatte integriert. Der Innendurchmesser des beispielsweise als Dichtring ausgeführten Dichtungselements ist dabei größer als der Außendurchmesser der Dübelkrone.

In der Zeichnung sind Ausführungsbeispiele der Erfindung dargestellt. Es zeigen:
- Fig. 1: in perspektivischer Darstellung einen Teil einer Gleisanlage mit Schiene, Schwelle und Schienenbefestigungssystem, wobei sich die Spannklemmen des Systems in einer Vormontageposition befinden;
- Fig. 2: in Explosionsdarstellung die Winkelführungsplatte eines etwas anders ausgeführten Schienenbefestigungssystems, wobei insbesondere ein Dichtungssystem dargestellt ist;
- Fig. 3: in perspektivischer Ansicht die Winkelführungsplatte des Schienenbefestigungssystems nach Fig. 2 samt einer Zwischenhülse mit Dichtungselement;
- Fig. 4: eine geschnittene Seitenansicht des Schienenbefestigungssystems nach Fig. 2 in der Vormontageposition;
- Fig. 5: eine geschnittene Seitenansicht des Schienenbefestigungssystems nach Fig. 2 in der Endmontageposition;
- Fig. 6a: den Radialschnitt und
- Fig. 6b: die Draufsicht auf das Dichtungselement in Form eines Dichtungsrings;
- Fig. 7: eine geschnittene Seitenansicht des Schienenbefestigungssystems in der Vormontageposition gemäß einer hinsichtlich des eingesetzten Dichtungssystems alternativen Ausführungsform der Erfindung; und
- Fig. 8: in perspektivischer Ansicht die Winkelführungsplatte der Lösung gemäß Fig. 7, gesehen von unten, mit dem vorgesehenen Dichtungselement.

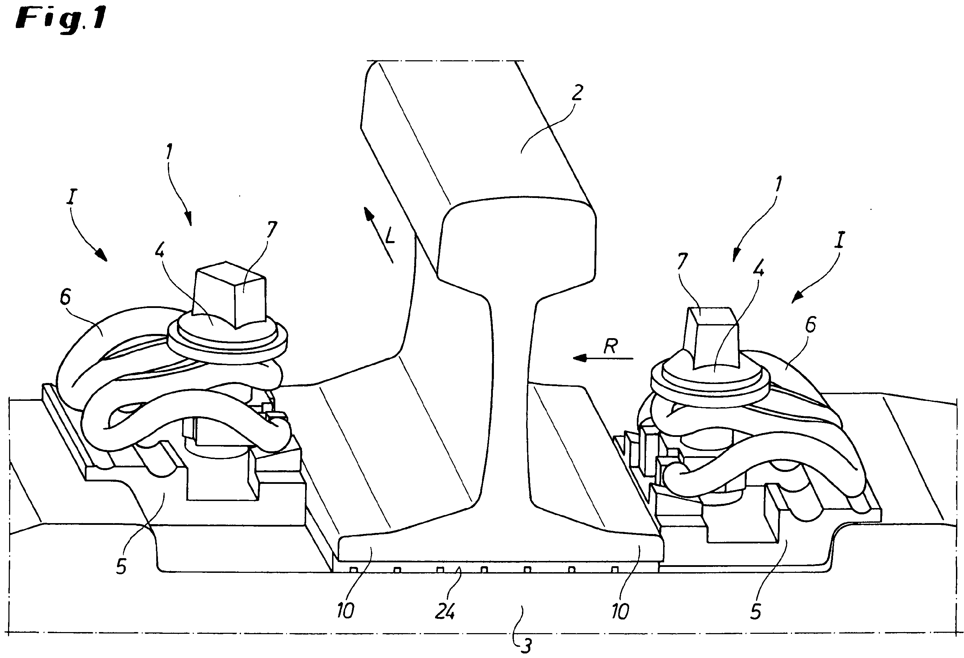

In Fig. 1 ist der grundsätzliche Aufbau eines kraftschlüssig-elastischen Schienenbefestigungssystems 1 für eine Gleisanlage zu sehen. Die Schiene 2 muss auf einer Schwelle 3 (oder einer Schienenunterlagsplatte) befestigt werden. Hierzu ist an der Schwelle 3 eine Ausnehmung 24 vorgesehen.

Für die Halterung der Schiene 2 und des Schienenfußes 10 sind beiderseits der Schiene 2 Winkelführungsplatten 5 vorgesehen, die mit je einem Befestigungselement 4, vorliegend in Form einer Schraube, an der Schwelle 3 befestigt sind. Die kraftschlüssig-elastische Halterung des Schienenfußes 10 erfolgt über eine Spannklemme 6, die durch die Schraube 4 mit verspannt wird. In Fig. 1 dargestellt ist eine Vormontageposition I, in der die Schrauben 4 mit einem Anzugsdrehmoment von ca. 50 Nm angezogen sind, d. h. noch nicht richtig angezogen sind.

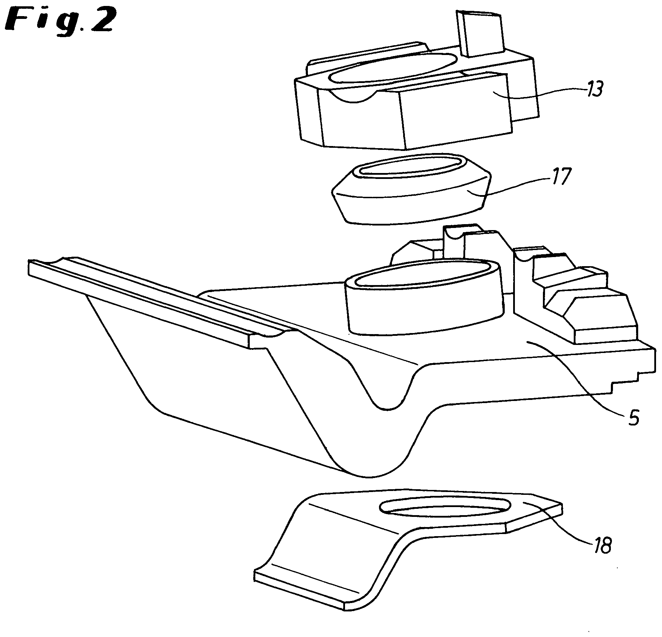

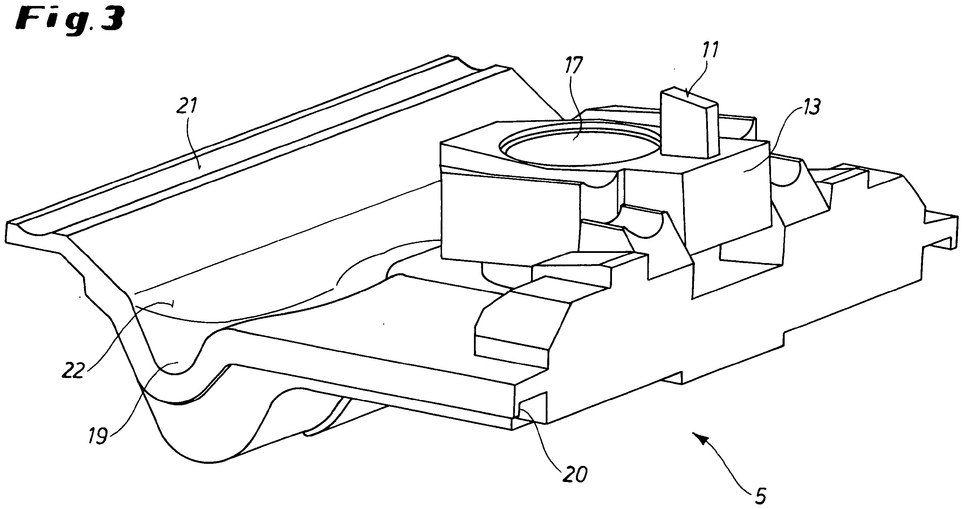

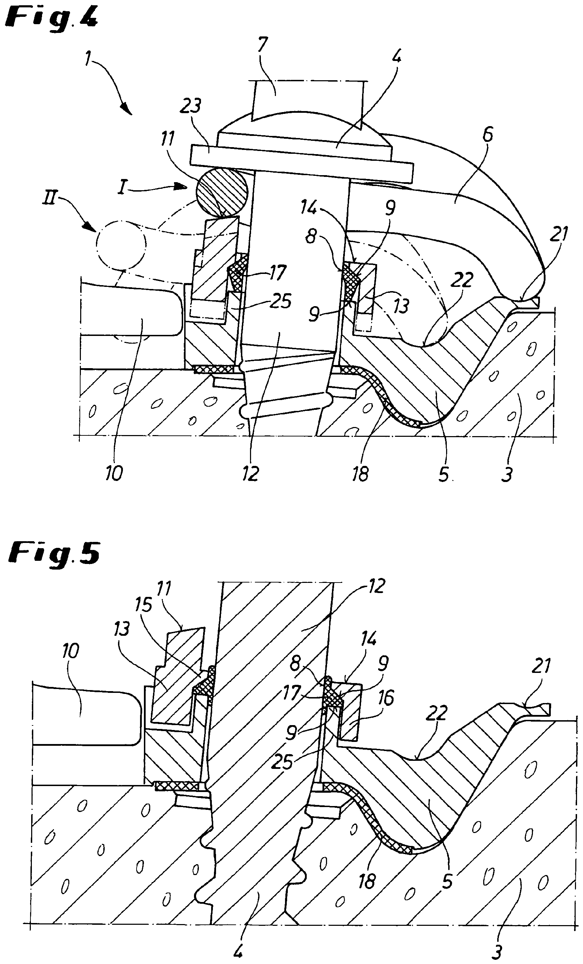

In den Figuren 2, 3, 4 und 5 ist eine Ausführungsform der Erfindung zu sehen, wobei in Fig. 2 die Winkelführungsplatte 5 samt einer Zwischenhülse 13 und zwei Dichtungselementen 17, 18 explosiv dargestellt ist, während Fig. 3 diese Bauteile im zusammengebauten Zustand zeigt. Die Figuren 4 und 5 zeigen Schnittdarstellungen durch das Schienenbefestigungssystem, wobei Fig. 4 eine Vormontageposition (Spannklemme dargestellt mit ausgezogenen Linien) zeigt; dargestellt ist in dieser Figur auch die Endmontageposition der Spannklemme, wobei diese in der Endmontageposition mit strichpunktierten Linien dargestellt ist. Fig. 5 zeigt die Endmontageposition, wobei hier allerdings die Spannklemme nicht dargestellt ist.

Die Spannklemme 6 wird bei der Montage des Schienenbefestigungssystems 1 von der Vormontageposition I gemäß Fig. 1 in eine Richtung R verschoben (s. Fig. 1), die im wesentlichen horizontal und senkrecht zur Längsachse L der Schiene 2 ist. Damit gelangt die Spannklemme 6 von der Position, die in Fig. 4 mit ausgezogenen Linien eingezeichnet ist, in die Endmontageposition II, die in Fig. 4 mit strichpunktierten Linien eingezeichnet ist. Für beide Positionen I und II sind in der Winkelführungsplatte 5 Ausnehmungen 21 (für die Vormontageposition) und 22 (für die Endmontageposition) vorgesehen, um die Spannklemme 6 hier in einer definierten Lage zu halten.

Unter Bezugnahme auf die Figuren 2 bis 5 sei folgendes bemerkt:

Die Winkelführungsplatte 5 weist einen Führungsabschnitt 25 auf (s. Fig. 4 und Fig. 5), der eine hohlzylindrische Gestalt hat. Dieser Führungsabschnitt 25 ist ausgebildet, ein Bauteil 13 in Form einer Zwischenhülse bzw. eines Dichtkopfs aufzunehmen. Die Winkelführungsplatte 5 hat des weiteren eine Ablaufrinne 19 und eine Abtropfkante 20.

Die Zwischenhülse 13 weist eine erhöhte Auflage 11 auf, die dazu dient, die Spannklemme in der Vormontageposition auf ihrem dem Schienenfuß 10 zugewandten Ende erhöht zu positionieren. Hierdurch kann ein Höhenversatz der Schiene während des Montagevorgangs ausgeglichen werden. Ansonsten ist die Zwischenhülse 13 im wesentlichen hohlzylindrisch ausgeführt, d. h. sie hat einen hohlzylindrischen Abschnitt 16 und im oberen axialen Endbereich einen radial nach innen vorspringenden Abschnitt 15. Die Oberseite 14 der Zwischenhülse 13 ist ausgebildet, um mit einer Spannkraft von oben beaufschlagt zu werden. Übertragen wird die Kraft im endmontierten Zustand des Systems 1 vom Kopf 7 der Schraube über eine Unterlegscheibe 23 und einen Abschnitt der Spannklemme 6.

Demgemäß kann die Zwischenhülse 13 auf dem Führungsabschnitt 25 der Winkelführungsplatte 5 teleskopartig vertikal verschoben werden.

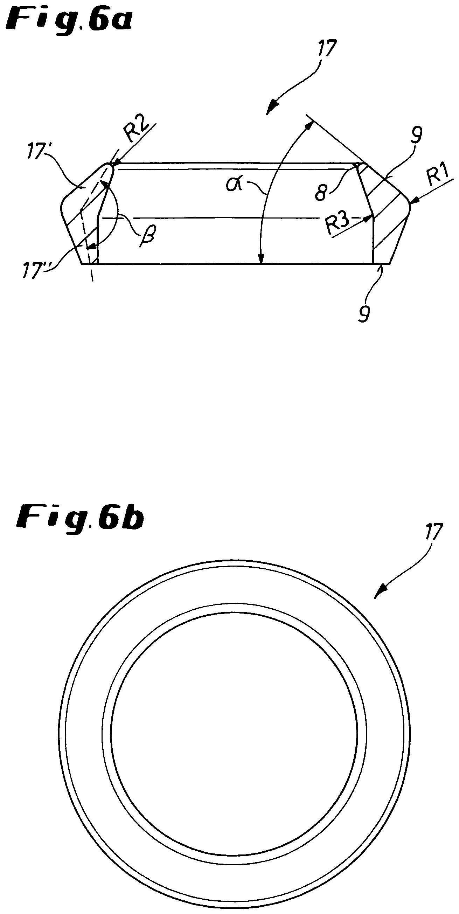

Die radial innenliegende Oberfläche des hohlzylindrischen Abschnitts 16 bildet die Begrenzung eines Aufnahmeraums, in den ein Dichtungselement 17 eingesetzt ist. Das Dichtungselement 17 ist im nicht verformten Zustand in Fig. 6a im Radialschnitt und in Fig. 6b in der Draufsicht dargestellt. Demgemäß ist das Dichtungselement 17 rotationssymmetrisch und weist zwei Ringabschnitte 17' und 17" auf, die einstückig miteinander ausgeführt sind. Die Erstreckungen der beiden Ringabschnitte 17', 17" lässt sich im Radialschnitt mit den links eingetragenen Achsen definieren, so dass ersichtlich wird, dass die beiden Abschnitte unter einem Winkel β zueinander verlaufen. Dieser ist vorliegend etwa 140°.

Beide Ringabschnitte 17' und 17" sind mit konischen Außen- und Innenflächen versehen. Zu erkennen ist, dass der obere Ringabschnitt 17' eine Außenumfangsfläche aufweist, die zu einer Richtung senkrecht auf die Rotationsachse des Körpers einen Winkel α einschließt, der hier bei ca. 40° liegt.

Ansonsten sind die einzelnen Übergänge der Abschnitte durch Radien R1, R2 und R3 ausgerundet.

Das Dichtungselement 17 hat mindestens eine erste Dichtfläche 8 und mindestens eine zweite Dichtfläche 9, vorliegend sogar zwei zweite Dichtflächen 9.

In Fig. 4 ist zu sehen, dass bereits in der Vormontageposition I das Dichtelement 17 mit der ersten Dichtfläche 8 am Schaft 12 der Schraube 4 anliegt und mit den beiden zweiten Dichtflächen 9 an der Winkelführungsplatte 5 bzw. - genauer gesagt - am oberen Ende des Führungsabschnitts 25 sowie an der Innenseite der Zwischenhülse 13 anliegt. Demgemäß wird bereits in der Vormontageposition I eine Abdichtung des Schafts 12 zum unteren Bereich der Schraube 4 bzw. der Winkelführungsplatte 5 hergestellt.

Wird die Spannklemme 6 in Fig. 4 nach links in die Endmontageposition II verschoben (s. strichpunktierte Lage der Spannklemme 6), stellt sich der Zustand ein, der in Fig. 5 zu sehen ist. Demgemäß presst jetzt die Schraube 4 mit ihrem Schraubenkopf 7 und der Unterlegscheibe 23 auf einen Schlaufenabschnitt der Spannklemme 6 und dieser dann wiederum auf die Oberseite 14 der Zwischenhülse 13, so dass die Zwischenhülse 13 auf dem Führungsabschnitt 25 nach unten gedrückt wird. Das sich in der Zwischenhülse 13 befindliche Dichtungselement 17 wird in der dargestellten Weise verformt, so dass die Dichtflächen 8 und 9 fest an die jeweiligen Kontaktbereiche angedrückt werden. Somit ist eine absolute Dichtigkeit sichergestellt.

In den Figuren 2 bis 5 ist weiter zu sehen, dass die Winkelführungsplatte 5 im Bodenbereich über ein weiteres Dichtungselement 18 zum Dübel in der Schwelle 3 hin abgedichtet ist. Hier hat das Dichtungselement 18 eine plattenartige Struktur.

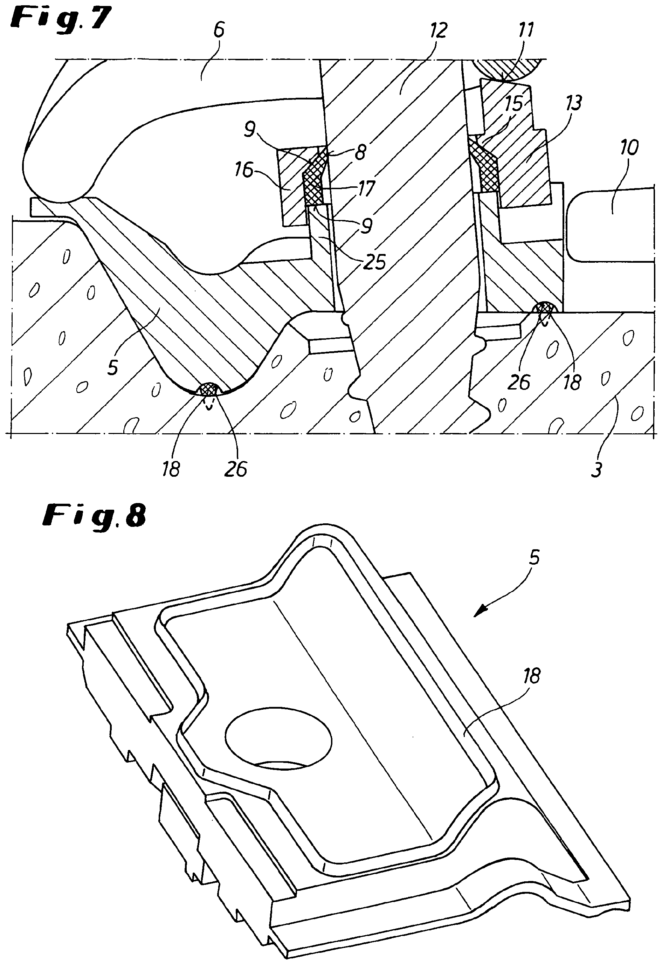

In den Figuren 7 und 8 ist eine hierzu alternative Lösung skizziert, wobei die Modifikation hier vor allem das Dichtungselement 18 betrifft. Die Winkelführungsplatte 5 weist an ihrer Unterseite (s. Fig. 8) eine geschlossen umlaufende nutförmige Vertiefung 26 auf, in der ein ebenfalls geschlossen umlaufendes Dichtungselement 18 platziert ist.

Eine Möglichkeit ist das Fixieren des Dichtungselements 18 mittels eines Klebstoffs. Eine andere Möglichkeit wäre, das Dichtungselement 18 durch einen Spritzgießvorgang an die Winkelführungsplatte 5 anzuspritzen.

In jedem Falle bietet das Dichtungselement 18 infolge des geschlossenen Umlaufs nach und auch schon vor der Endmontage eine zuverlässige Abdichtung der Winkelführungsplatte 5 zu ihrer unteren Auflagefläche. Wie in Fig. 7 angedeutet ist, ragt im noch nicht montierten Zustand das Dichtungselement 18 etwas aus der nutförmigen Vertiefung 26 heraus; der herausragende Bereich wird bei der Auflage der Winkelführungsplatte 5 auf der zu montierenden Unterlage zusammengedrückt, so dass eine einwandfreie Dichtfunktion sichergestellt ist.

Demgemäß ist sichergestellt, dass das erläuterte Dichtungskonzept sowohl in der Vormontage- als auch in der Endmontageposition eine zuverlässige Dichtwirkung bereitstellt.

Demgemäß stellt die Erfindung insoweit ein universelles Dichtungskonzept in Verbindung mit der vereinfachten Vormontagelösung für alle Schienenbefestigungssysteme zur Verfügung, die mit den Spannklemmen und Winkelführungsplatten ausgestattet sind und die mit einer Schraube-Dübel-Kombination oder auch in anderer Weise auf den (Beton)Schwellen fixiert sind.

### Bezugszeichenliste:

- 1: Schienenbefestigungssystem
- 2: Schiene
- 3: Schwelle
- 4: Befestigungselement (Schraube)
- 5: Winkelführungsplatte
- 6: Spannklemme
- 7: Kopf der Schraube
- 8: erste Dichtfläche
- 9: zweite Dichtfläche
- 10: Schienenfuß
- 11: Auflage
- 12: Schaft
- 13: Bauteil / Zwischenhülse (Dichtkopf)
- 14: Oberseite der Zwischenhülse
- 15: radial vorspringender Abschnitt
- 16: hohlzylindrischer Abschnitt
- 17: Dichtungselement / Isolationselement
- 17': Ringabschnitt
- 17": Ringabschnitt
- 18: Dichtungselement / Isolationselement
- 19: Ablaufrinne
- 20: Abtropfkante
- 21: Ausnehmung für Spannklemme
- 22: Ausnehmung für Spannklemme
- 23: Unterlegscheibe
- 24: Ausnehmung
- 25: Führungsabschnitt
- 26: nutförmige Vertiefung

- I: Vormontageposition
- II: Endmontageposition

- R: Verschieberichtung
- L: Längsachse der Schiene
- R1: Radius
- R2: Radius
- R3: Radius

- α: Winkel
- β: Winkel

## Patentansprüche

1. Schienenbefestigungssystem (1) zur kraftschlüssig-elastischen Befestigung einer Schiene (2) auf einer Schwelle (3) einer Gleisanlage, umfassend mindestens eine an der Schwelle (3) mit mindestens einem einen Schaft (12) aufweisenden Befestigungselement (4) festlegbare Winkelführungsplatte (5) und mindestens eine Spannklemme (6), wobei die Winkelführungsplatte (5) ausgebildet ist, um die Spannklemme (6) in einer Vormontageposition (I) und in einer Endmontageposition (II) zu halten,
**dadurch gekennzeichnet,**
**dass** auf oder in der Winkelführungsplatte (5) und/oder in einem mit der Winkelführungsplatte (5) zu verbindenden Bauteil (13) ein Dichtungselement (17) angeordnet ist, das sowohl in der Vormontageposition (I) als auch in der Endmontageposition (II) mit mindestens einer ersten Dichtfläche (8) dichtend am Schaft (12) des Befestigungselements (4) und mit mindestens einer zweiten Dichtfläche (9) an der Winkelführungsplatte (5) und/oder an dem mit der Winkelführungsplatte (5) zu verbindenden Bauteil (13) anliegt.

2. Schienenbefestigungssystem nach Anspruch 1, **dadurch gekennzeichnet,**
**dass** das Befestigungselement (4) eine Schraube ist, die in einen in der Schwelle (3) angeordneten Dübel eingeschraubt ist.

3. Schienenbefestigungssystem nach Anspruch 1 oder 2, **dadurch gekennzeichnet, dass** das Dichtungselement (17) als Dichtungsring ausgebildet ist, der vorzugsweise aus zwei Ringabschnitten (17', 17") besteht, die im Radialschnitt zueinander unter einem Winkel (β) angeordnet sind.

4. Schienenbefestigungssystem nach Anspruch 3, **dadurch gekennzeichnet,**
**dass** die beiden Ringabschnitte (17', 17") an einer äußeren und/oder inneren Begrenzungsfläche jeweils konisch ausgebildet sind, wobei die radiale Dicke der Ringabschnitte (17', 17") zu den axialen Enden des Dichtungsrings (17) hin jeweils abnimmt.

5. Schienenbefestigungssystem nach einem der Ansprüche 1 bis 4, **dadurch gekennzeichnet, dass** das Dichtungselement (17) in einem mit der Winkelführungsplatte (5) zu verbindenden Bauteil (13) in Form einer Zwischenhülse angeordnet ist, wobei die Zwischenhülse (13) einen hohlzylindrischen Abschnitt (16) mit einer innenzylindrischen Fläche aufweist, die einen Aufnahmeraum für das Dichtungselement (17) begrenzt.

6. Schienenbefestigungssystem nach Anspruch 5, **dadurch gekennzeichnet,**
**dass** die Zwischenhülse (13) einen radial nach innen vorspringenden Abschnitt (15) aufweist, der einen axialen Anlagebereich für das Dichtungselement (17) bildet.

7. Schienenbefestigungssystem nach einem der Ansprüche 1 bis 6, **dadurch gekennzeichnet, dass** das verbindende Bauteil (13), das Dichtungselement (17) und der Schaft (12) konzentrisch zueinander angeordnet sind.

8. Schienenbefestigungssystem nach einem der Ansprüche 1 bis 7, **dadurch gekennzeichnet, dass** das Dichtungselement (17) aus Elastomer- oder Gummimaterial besteht und elastische Materialeigenschaften aufweist.

9. Schienenbefestigungssystem nach einem der Ansprüche 1 bis 8, **dadurch gekennzeichnet, dass** zwischen der Unterseite der Winkelführungsplatte (5) und der Oberseite der Schwelle (3) ein Dichtungselement (18) angeordnet ist.

10. Schienenbefestigungssystem nach Anspruch 9, **dadurch gekennzeichnet,**
**dass** das Dichtungselement (18) flächig ausgebildet ist oder in einer nutförmigen Vertiefung (27) an der Unterseite der Winkelführungsplatte (5) angeordnet ist.

## Claims

1. A rail fastening system (1) for the friction-locked resilient fastening of a rail (2) on a sleeper (3) of a rail track system, comprising at least one angle guide plate (5) that can be fixed to the sleeper (3) by at least one fastening element (4) having at least one shank (12), and at least one tension clamp (6), the angled guide plate (5) being designed to hold the tension clamp (6) in a preinstallation position (I) and in final installation position (II),
**characterized in**
**that** a sealing element (17) is arranged on or in the angled guide plate (5) and/or in a component (13) to be connected to the angled guide plate (5) and which sealing element, both in the preinstallation position (I) and in the final installation position (II), rests in a sealing manner with at least one sealing surface (8) against the shank (12) of the fastening element (4) and with at least one second sealing surface (9) against the angled guide plate (5) and/or against the component (13) to be connected to the angled guide plate (5).

2. The rail fastening system according to claim 1,
**characterized in that** the fastening element (4) is a screw that is screwed into an anchor arranged in the sleeper (3).

3. The rail fastening system according to claim 1 or 2,
**characterized in that** the sealing element (17) is designed as a seal ring that is preferably composed of two ring sections (17', 17") which, in radial section, are arranged at an angle (β) to each other.

4. The rail fastening system according to claim 3,
**characterized in that** at an outer and/or inner boundary surface, the two ring sections (17', 17") are in each case formed conically, the radial thickness of the ring sections (17', 17") in each case decreasing towards the axial ends of the seal ring (17).

5. The rail fastening system according to any one of claims 1 to 4, **characterized in that** the sealing element (17) is arranged in a component (13) that is to be connected to the angled guide plate (5) and has the form of an intermediate sleeve, the intermediate sleeve (13) having a hollow-cylindrical section (16) with an inner cylindrical surface that borders a receiving space for the sealing element (17).

6. The rail fastening system according to claim 5,
**characterized in that** the intermediate sleeve (13) has an radially inward projecting section (15) that forms an axial contact region for the sealing element (17).

7. The rail fastening system according to any one of claims 1 to 6, **characterized in that** the connecting component (13), the sealing element (17) and the shank (12) are arranged concentric to each other.

8. The rail fastening system according to any one of claims 1 to 7, **characterized in that** the sealing element (17) is composed of elastomer or rubber material and has elastic material properties.

9. The rail fastening system according to any one of claims 1 to 8, **characterized in that** a sealing element (18) is arranged between the lower side of the angled guide plate (5) and the upper side of the sleeper (3).

10. The rail fastening system according to claim 9,
**characterized in that** the sealing element (18) is formed flatly or is arranged in a groove-shaped recess (27) on the lower side of the angled guide plate (5).

## Revendications

1. Système de fixation de rails (1) pour la fixation élastique par blocage d'un rail (2) sur une traverse (3) d'un chemin de fer, comprenant au moins une plaque de guidage angulaire (5) apte à être fixée sur la traverse (3) à l'aide d'au moins un élément de fixation (4) présentant un arbre (12), et au moins une mâchoire de serrage (6), dans lequel la plaque de guidage angulaire (5) est conçue de manière à maintenir la mâchoire de serrage (6) dans une position de pré-montage (I) et dans une position de montage final (II),
**caractérisé en ce que**
sur ou dans la plaque de guidage angulaire (5) et/ou dans un composant (13) destiné à être relié à la plaque de guidage angulaire (5), il est prévu un élément d'étanchéité (17) s'appliquant, aussi bien dans la position de pré-montage (I) que dans la position de montage final (II), avec au moins une première surface d'étanchéité (8) de façon étanche sur l'arbre (12) de l'élément de fixation (4) et avec au moins une deuxième surface d'étanchéité (9) sur la plaque de guidage angulaire (5) et/ou sur le composant (13) destiné à être relié à la plaque de guidage angulaire (5).

2. Système de fixation de rails selon la revendication 1,
**caractérisé en ce que** l'élément de fixation (4) est une vis vissée dans une cheville disposée dans la traverse (3).

3. Système de fixation de rails selon la revendication 1 ou 2, **caractérisé en ce que** l'élément d'étanchéité (17) est conçu comme une bague d'étanchéité constituée de préférence de deux segments de bague (17', 17") disposés de manière à former un angle (β) entre eux dans la section radiale.

4. Système de fixation de rails selon la revendication 3,
**caractérisé en ce que** les deux segments de bague (17', 17") sont conçus respectivement de façon conique sur une surface de délimitation extérieure et/ou intérieure, l'épaisseur radiale des segments de bague (17', 17") diminuant respectivement vers les extrémités axiales de la bague d'étanchéité (17).

5. Système de fixation de rails selon l'une des revendications 1 à 4, **caractérisé en ce que** l'élément d'étanchéité (17) est disposé dans un composant (13) destiné à être relié à la plaque de guidage angulaire (5) sous la forme d'une douille intermédiaire, la douille intermédiaire (13) présentant une section cylindrique creuse (16) avec une surface cylindrique intérieure délimitant un espace de réception pour l'élément d'étanchéité (17).

6. Système de fixation de rails selon la revendication 5,
**caractérisé en ce que** la douille intermédiaire (13) présente une section (15) faisant saillie radialement vers l'intérieur, formant une région d'application axiale pour l'élément d'étanchéité (17).

7. Système de fixation de rails selon l'une des revendications 1 à 6, **caractérisé en ce que** le composant (13) à relier, l'élément d'étanchéité (17) et l'arbre (12) sont disposés de façon concentrique les uns par rapport aux autres.

8. Système de fixation de rails selon l'une des revendications 1 à 7, **caractérisé en ce que** l'élément d'étanchéité (17) est constitué d'un matériau élastomère ou à base de caoutchouc et présente des propriétés de matériau élastiques.

9. Système de fixation de rails selon l'une des revendications 1 à 8, **caractérisé en ce qu'**un élément d'étanchéité (18) est disposé entre le côté inférieur de la plaque de guidage angulaire (5) et le côté supérieur de la traverse (3).

10. Système de fixation de rails selon la revendication 9,
**caractérisé en ce que** l'élément d'étanchéité (18) est conçu planaire ou disposé dans un renfoncement en forme de rainure (27) dans le côté inférieur de la plaque de guidage angulaire (5).
